# EUROPEAN PATENT SPECIFICATION

(11) **EP 0 749 672 B1**
(45) Date of publication and mention of the grant of the patent: **05.06.2002**
(21) Application number: 95913460.2
(22) Date of filing: 10.03.1995
(51) Int. Cl.: H05B 37/03, H04B 3/54, H02J 13/00

(54) **COMMUNICATION ON A SERIES CABLE**
KOMMUNIKATION UEBER EINE SERIENLEITUNG
COMMUNICATION SUR UN CABLE SERIE

(30) Priority: 11.03.1994 SE 9400847
(43) Date of publication of application: 27.12.1996
(73) Proprietor: Safegate International Aktiebolag, 213 76 Malmö (SE)
(72) Inventor: MILLGARD, Lars, S-831 52 Östersund (SE); LIDSTRÖM, Kjell, S-931 22 Skelleftea (SE)
(74) Representative: HOFFMANN - EITLE
(86) International application number: SE9500251
(87) International publication number: WO9524820

(56) References cited:
- EP-A- 0 445 773
- US-A- 4 024 528
- US-A- 4 845 466

## Description

### Field of the invention

The present invention relates to a message transfer method and system for control and monitoring of lightings, lamps, sensors, detectors and other loads, more particularly for control and monitoring of airfield lighting systems including sensors for Surface Movement and Guidance Control Systems (SMGCS).

### History of the prior art

The lamps for airfield lighting systems are most often fed by a constant current power supply via a series cable. Such lamps are connected in series with the supply cable using isolation transformers. A common type of automatic lamp monitoring system monitors the current and the voltage supplied to the series cable. If a lamp fails, the impedance in a loop of lamps changes, and this is reflected in the supplied current and voltage. A disadvantage with this method is that there is no information about which lamp has failed. It is therefore difficult to determine the urgency for replacing the lamp. Also, if a large number of lamps are attached to the loop circuit, the change in impedance caused by lamp failure can be so small that it becomes difficult to detect. If several lamps fail the change in impedance becomes greater.

Another type of monitoring system is based upon assigning a unique address along with a monitoring unit to each lamp. When the lamp fails, the unit short-circuits the lamp and periodically breaks the short-circuit in a timed sequence determined by the address of the lamp. Identification of the failed lamp is made by determining the time (with regard to some reference) in conjunction with measuring disturbances in voltage or current through a detector connected to the primary side of the series transformers. Again, the change of impedance due to lamp failure can be so small that it is difficult to detect, but this time the short-circuit for each lamp, one by one, is released so that only one lamp at the time signals a failure to a main monitoring unit.

Such prior art systems are known from U.S. Pat. No. 5,359,325 by Ford et al, European Pat. No. 0 445 773 by Taniguchi et al and European Pat. No. 0 448 358 by Watanabe. These systems are relying on the saturation of the series isolation transformers. An isolation transformer of the kind used in an airfield lighting system saturates, i.e. it acts like an air coil with almost no impedance when a lamp failure occurs on the secondary side of the transformer, thus creating disturbances on the primary side through the change of flux. The change of flux is detectable, but in some cases hard to differ from other disturbances as for example such created by the net frequency current zero crossings when the current is thyristor modulated as is common. It is especially difficult to detect disturbances through flux changes when a lot of transformers are connected in series.

Further, these documents do not teach a communication during a short part of a net frequency half cycle (period). Signals in said cited documents are transferred over much longer time periods not regarding zero crossings. The inventions according to the above cited documents affect the impedance, but without concerning whether the impedance switches between high or low during a net frequency half cycle.

Another prior art document is disclosed through U.S. patent No. 4,398,178 by Russ et al which teaches a system for transmitting information on an alternating current line. This cited document has certain distinctive features, it has at least two conductors connected to an a.c. power source. Another feature involves that amplitude reductions are generated by means of a normally short-circuited impedance.

Further, document U.S. patent No. 4,398,178 indicates a method to transmit pulse signals from the current generator side to a number of receivers. The receivers respond according to a method which is not implementable on an airfield lighting system communicating on a series cable. It presumes a separate current transformer used only for communication because it is normally short-circuited. The transmitter unit communicates through interruptions of a short-circuited transformer (impedance).

Still further, its receiver units communicate through a load and not through a transformer. Hence, the disclosed system communicates with different devices for upward and downward communication.

From US-A-4,024,528 there is known a remote switching system aiming at an improved remote switching using an a.c. power line. The system utilizes the relatively quiet or noise-free early of the half cycles of the a.c. line voltage to transmit and switch control signals.

### Summary of the disclosed invention

The cited documents U.S. Pat. No. 5,359,325, European Pat. No. 0 445 773 and European Pat. No. 0 448 358 do not teach a communication during a short part of a net frequency half cycle which is essential for the function of the present invention. The present invention creates a voltage pulse during a short time of the net frequency half cycle. The total of likewise created pulses during a specific half cycle are transferred as a pulse signal on the series cable. This is not disclosed in said documents which signals are transferred over much longer time periods not regarding zero crossings. The inventions according to the latter documents also affect the impedance, but without concerning whether the impedance switches between high or low during a net frequency half cycle. The present invention involves always using a controlled high impedance for communicating pulses contained in pulse signals.

U.S. patent No. 4,398,178 as mentioned teaches a system for transmitting information on an alternating current line. This document has features differing from the present invention. It has at least two conductors connected to an a.c. power source, the present invention has only one conductor connected. Another difference is to be found in that amplitude reductions are generated by means of a normally short-circuited impedance in contrary to the present invention which does not at all communicate with a short-circuited impedance, it communicates by short interruptions accomplished through a switch that is connected in series to the load.

Further, U.S. patent No. 4,398,178 indicates a method to transmit pulse signals from the current generator side to a number of receivers. The receivers respond according to a method which is not implementable on an airfield lighting system communicating on a series cable. It presumes a separate current transformer used only for communication because it is normally short-circuited. The transmitter unit communicates through interruptions of a short-circuited transformer (impedance) which differs entirely from the present invention which transformers are short-circuited only during a lamp failure.

Still further, its receiver units communicate through a load and not through a transformer. Hence, the disclosed system according to U.S. patent No. 4,398,178 communicates with different devices for upward and downward communication. In order to implement a system disclosed in U.S patent No. 4,398,178, for example, on an airfield system for monitoring of airfield lighting would require a total redesign of an existing system.

The present invention is easily adopted to an existing system. Existing current transformers are used for powering of a load and for generating high frequency pulse signals where a pulse signal contains a number of pulses and where every single pulse is created by pulse wise affecting the impedance during a short time (creates a high impedance) in comparison to a half cycle where current is flowing. The interruption of the secondary side circuit is thus so short that the influence on the power fed to a load is negligible.

The present invention generally relates to a system and a method for message transfer between a main control system and addressable monitor switches for a lighting system. Such switches are connected in series with the supply cable using isolation transformers and on the other hand attached to a load which they are monitoring. Examples of such loads could be lamps and sensors. A sensor could, for example, be of magnetic, inductive, optical type e.t.c. for detecting or sensing the presence of obstacles such as vehicles.

In order to overcome the aforementioned problems, it is an object of the present invention to provide a method for synchronisation of a time slot within every half cycle of the a.c. net frequency so that harmonics which interfere with the relatively high frequencies used for message transmission are avoided. Harmonics of the net frequency are frequent due to the fact that the a.c. current often is controlled by means of thyristors which most certainly creates harmonics at zero crossings.

A further object of the invention is to provide a system with a message scheme comprising time slots for synchronized communication between involved entities.

Another object of the invention is to provide a communication system that can be easily integrated in an existing airfield lighting control system through small LMS and/or SIU modules attached to existing standard components such as standard lighting transformers, sensors, lamps, cables e.t.c. A main control system is similarly attached to the series cable through a standard transformer.

Yet another object of the invention is that the control and monitoring system is provided from the secondary side of transformers which is of great advantage compared to systems that are provided at the primary side of a transformer.

A still further object of the invention is to provide means for an immediate switching between a steady state sequence for monitoring of LMS and/or SIU modules and a state where orders are to be sent to the LMS and/or SIU modules from a main control unit.

The invention is defined by the appended claims.

### Brief description of the drawing

For a more complete understanding of the present invention and for further objectives and advantages thereof, reference may now be had to the following description taken in conjunction with the accompanying drawings, in which:
**Fig. 1** is a schematic blockdiagram layout of an existing prior art airfield lighting monitoring system including Light Monitoring Switches and a main control system;
**Fig. 2 - 4** are schematic block diagrams of some of the blocks in Fig. 1;
**Fig. 5a and 5b** are illustrations of a thyristor modulated net frequency curve and its high pass filtered response whit the fundamental frequency filtered out respectively;
**Fig. 6** shows a scheme of square waves used to synchronize a time slot to the net frequency in a preferred embodiment;
**Fig. 7** shows a circuit used to create square waves according to Fig. 6:
**Fig. 8** shows a series circuit with its connectors and interfaces according to the invention;
**Fig. 9** shows an airfield lighting system according to the present invention;
**Fig. 10** shows how the information exchange is performed on a structural level;
**Fig. 11** shows a timing sequence for the time slots according to the present invention; and
**Fig. 12** shows a timing sequence for a sending of an order message.

### Detailed description

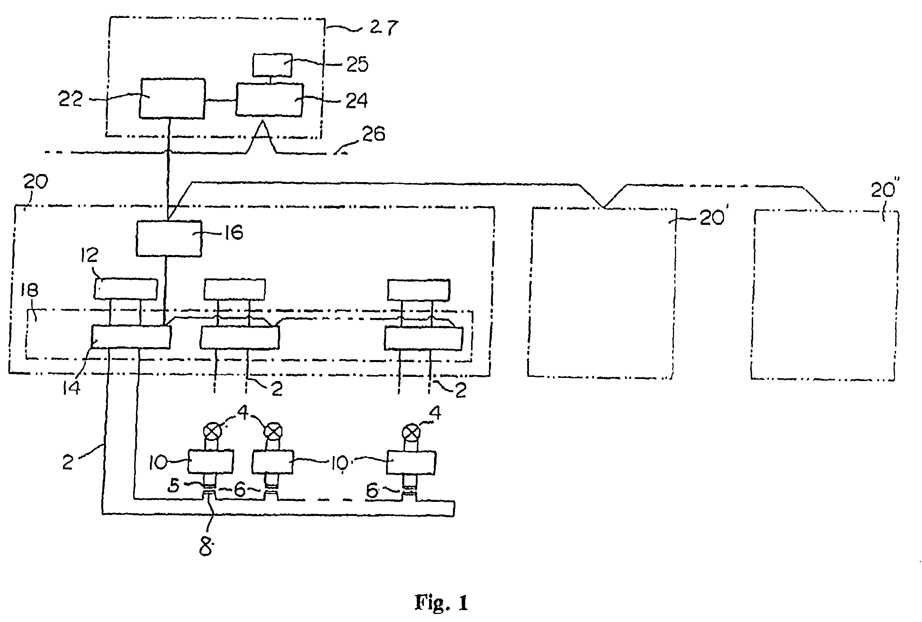

Figures 1-5 illustrate, in conjunction with the related description, a prior art airfield lighting system according to principles as taught in a relating copending international application published as WO/ 94/13119 assigned to the assignee of the present invention entitled "Systems and Methods for Transmitting Pulse Signals" by Lars Millgard. The present invention is able to utilize such a system for the performance of its objectives.

The airfield lighting monitoring system shown in Fig. 1 includes a number of current supply loops 2 for lamps 4, only one of said loops being shown in its entirety in the Figure. Each lamp 4 is connected to its associated loop 2 via a secondary winding 5 of an isolation transformer 6, the primary winding 8 of which is series connected in the current supply loop, and via a light monitor switch (LMS) 10. Each current supply loop 2 is fed by a constant current regulator (CCR) 12 via a communicating unit 14. A concentrator unit (CU) 16 is connected in a multi-drop configuration to a group 18 of the communicating units 14. The units 14 and 16 will be described more closely below.

The CU unit 16 and its associated elements, described above, together form a sub-unit 20, which can e.g. be devoted to a certain part of the lighting system of an air field. The lighting system can include a required number of similar sub-units, of which some are indicated at 20' and 20".

The CU units 16 in said sub-units are connected to a central concentrator unit 22 via multi-drop modems.

The central CU unit 22 can be connected to a computer 24 with a display 25. The computer 24 can be further connected to other systems via for example a local area network (LAN) 26. The unit 22 and computer 24 can e.g. be localized in a control room 27, or at some other suitable place.

Generally, the isolation transformers used in a system supplied with constant current, the current flowing through the secondary winding is proportional to the current flowing through the primary winding and, within certain limits, independent of the load on the secondary side. The voltage across the primary winding is proportional to the voltage on the secondary side. The proportionality is in both cases mainly given by the relation between the number of wire turns on the windings
A communication unit 14 detects responses from the LMS modules and reports the addresses of nonresponding modules via the local CU unit 16 to the central concentrator unit 22. In the central concentrator unit 22, the addresses are stored in a database accessible to the computer 24 in the control room 27.

On the display 25 the number of failed lamps 4 and the position of each failed lamp can be displayed. Different alarm criteria can be set in the central concentrator Unit 22 via the computer 24.

As will be described more closely below the communication between the LMS modules and the associated communicating unit is carried out by high frequency signals superimposed on the 50 Hz or 60 Hz current in the power cable.

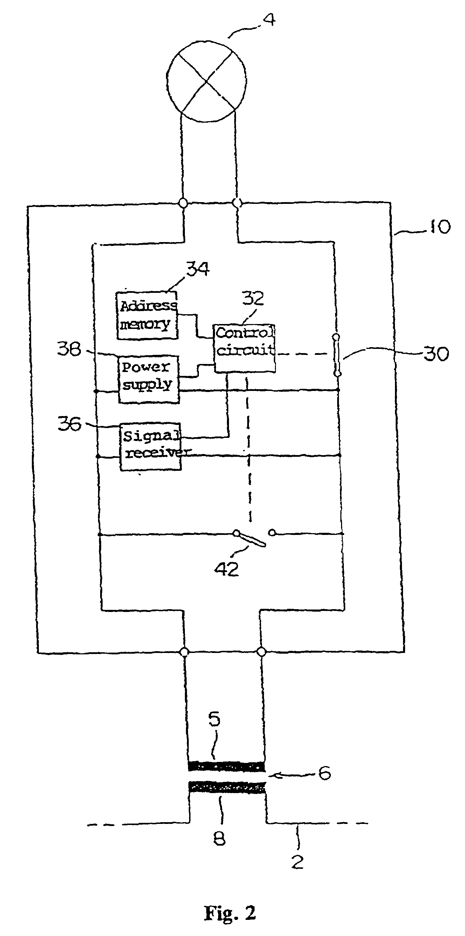

A schematic block diagram of a LMS module 10 is shown in Fig. 2, also illustrating the connection of the lamp 4 into circuit with the secondary winding 5 of the transformer 6.

The LMS module 10 is schematically shown to include a switch 30 in series with the lamp 4 connected for interrupting the current in the lamp circuit, The module 10 furthermore includes a control circuit or logic unit 32, e.g. a microprocessor for controlling the switch 30, an address memory 34 for storing the above mentioned address thereof and a receiver 36 connected for receiving the synchronization signal from the unit 14 and forwarding it to the logic unit 32 the module 10 also contains a dc power supply unit 38 for the logic unit 32 and receiver 36.

Also connected over the secondary winding 5, and thus in parallel with the lamp 4, is a switch 42 controlled by the control circuit 32. In a manner known to the man of the art the design of the switch 30 can e.g, be based on the use of field-effect transistors.

The memory for storing the address of each LMS module 10 can be a PROM-memory.

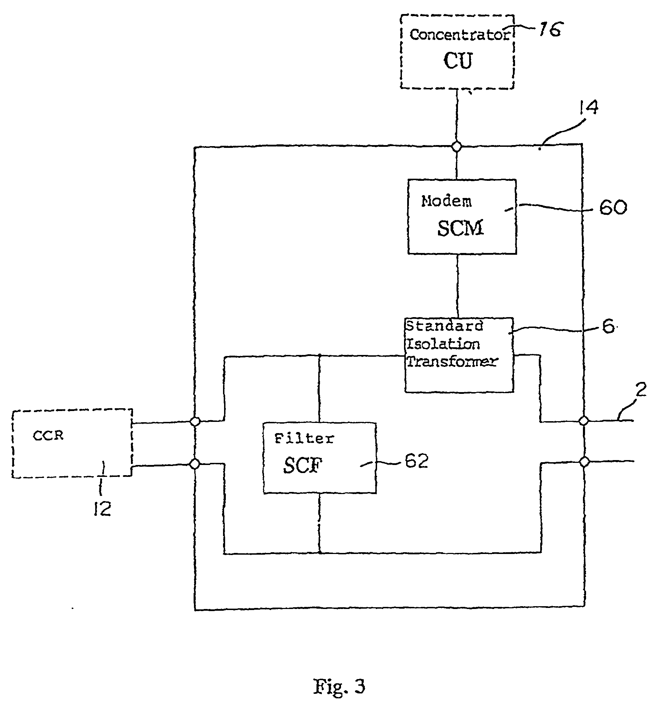

A schematic block diagram of the communicating unit 14 is shown in Fig 3. The communicating unit comprises a series circuit modem (SCM) 60, a series circuit filter (SCF) 62 and a coupling transformer 6.

The SCM 60 is connected via the transformer 64 to the series circuit 2 powering the lights 4, for sending the synchronizing signals and for detecting the responses from LMS modules. The SCM 60 is also connected to the concentrator 22 for reporting the address of LMS modules with failed lamps.

The filter 62 reduces noise in the current coming from the CCR 12 and prevents signals coming from the SCM 60 and the modules 10 from passing back into the regulator unit 12.

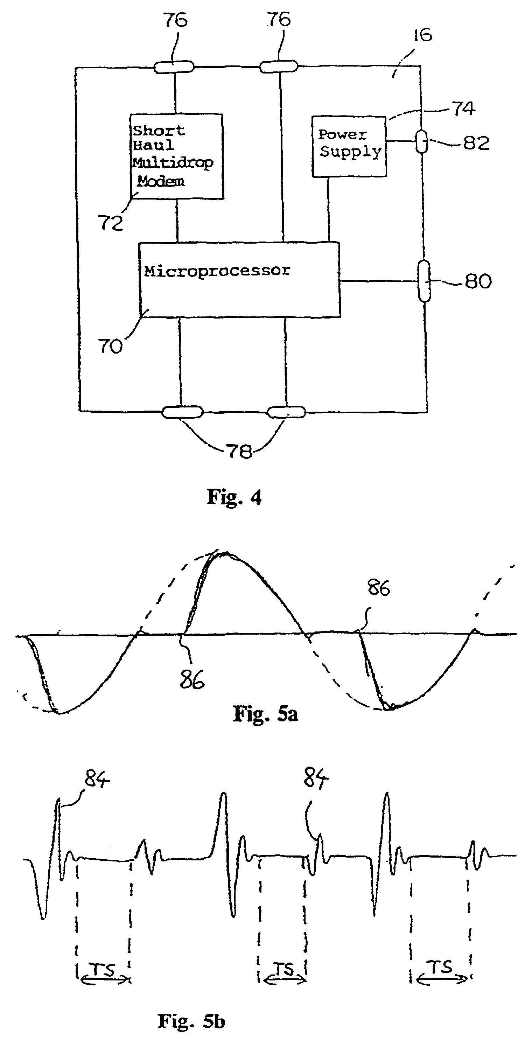

According to Fig. 4, the concentrator unit 16 comprises a microprocessor 70, a modem 72 and a power supply 74. Connections to an information system, not shown, to SCM units 14, to the computer 24, and to the power net are indicated at 76, 78, 80, and 82, respectively.

The function of the CU unit 16 is to collect the information from the connected communicating units 14 and store it in a database of the microprocessor 10, where the computer 24 in the control room 27 can access it.

The CU unit 16 may also be designed to test the acquired data against alarm criteria and give an alarm if required.

With a monitoring and control system of the kind described above, each lamp in airfield lighting circuits can be individually monitored. The system can continuously provide updated information about the position of failed lamps. An apparatus may be provided for displaying the information locally, or transmitting it to any other information system at the airfield.

The system requires no extra cabling on the field as it operates on existing power cables.

The LMS module 10 may store its address in an EEPROM-memory 34, which permits the stored address to be changed or receive its address as a binary code

In a preferred embodiment of the control and monitoring system of the present invention it employs a main control, LMS and/or SIU modules that are attached to standard transformers at their secondary side. The SIU module is a programmable and addressable microprocessor based sensor interface module, having almost the same function for surface movement and guidance control sensors as an LMS module has for a lamp. It operates on the secondary side of an isolation transformer and meets the same environmental requirements as an isolation transformer and operates in the current range of 2,8 A - 6,6 A. A SIU module powers a sensor 9 as well as monitoring its output. A sensor output can be of the type presence detection, heading detection, sensor self test e.t.c. Generally, sensors used are pertained to Surface Movement and Guidance Control Systems (SMGCS). As mentioned, the system transfers information between the main control system and the LMS units 10 in both directions, address and control information from the control system and status information from the LMS module, the same is also valid for a SIU module.

Further, the information exchange is conducted through signalling of high frequency signals, i.e, high frequency in relation to net frequencies which often are 50 or 60 Hz in frequency, so the information transfer is preferably carried out on frequencies between, for example, 4-7 kHz. This generally low frequency band is chosen due to some drawbacks in signalling with yet higher frequencies when communicating on a series cable, like for instance:
- High attenuation during signalling between the primary and the secondary side of transformers;
- High attenuation in those lamp transformers which are attached to the cable loop;
- Creation of oscillation nodes in long series cables, and
- Crosstalk between different series cables.

One of the principles underlying the present invention relies on net frequency synchronization which minimizes net generated distortions, and on encoding with minimal overhead where a small part is used for the purpose of addressing. The series circuits in an airfield lighting system are generally fed from a CCR 12. Significantly, current control is often performed by affecting its curve form, for example, through thyristor control, see Fig. 5a and 5b which are illustrations of a thyristor modulated net frequency curve and its high pass filtered response whit the fundamental frequency filtered out respectively. Since the curve form of the current thus deviates from a plain sinusoidal one, it contains harmonics 84 that may appear in the frequency range applying to the performed communication. Harmonics 84 of the basic frequency mostly occur when the current controlling device, e.g. thyristor, is turned on or off e.g. at the zero crossings 86 of the curve related to the modulated current. The LMS/SIU system according to the invention only creates TS synchronization for information transfer in time intervals within every half net cycle where the content of harmonics and other distortions is low in the a.c. net frequency current.

A preferred embodiment of the present invention uses transmission of "1" and "0" where one bit is sent every half cycle of the net frequency in a time slot TS, for example, of very short periods of 2-3 ms. A time slot is placed in the part of the half cycle where current is flowing through the transformer and where the influence of harmonics is at its lowest. Finding the part for the time slot could be empirical at the initialisation stage of a system using the present invention thus being valid for that specific system. The signalling for communicating from LMS/SIU modules is generated through very short interruptions of the secondary transformer side circuit, whereby a high impedance arises thus creating a pulse of high voltage on the primary side of the transformer for every interruption in the assigned time slot TS. Hence, the interruptions create high frequency pulses superimposed on the net frequency in the assigned time slot TS clearly distinguishable from distortions when detected by the SCM unit 60. The series circuit 30 controlled by the control circuit 32 switches for very short intervals thus creating a controlled high impedance on the secondary transformer side. The present invention involves always using a controlled high impedance for communicating pulses contained in pulse signals. It creates a voltage pulse during a short time of the net frequency half cycle. The total of likewise created pulses during a specific half cycle are transferred as a pulse signal on the series cable.

According to the present invention, existing current transformers, no additional transmitters, are used for powering of a load and for generating high frequency pulse signals where a pulse signal contains a number of pulses and where every single pulse is created by pulse wise affecting the impedance during a short time (creates a high impedance) in comparison to a half cycle where current is flowing. The interruption of the secondary side circuit is thus so short that the influence on the power fed to a load is negligible.

If the interruptions on the secondary transformer side are longer e.g one net frequency half cycle, the transformer will saturate rendering almost no impedance, i.e., no creation of a high voltage pulse, but an hardly detectable distortion through the change of magnetic flux. It would, in relation to prior art, request a transmitter connected to the series cable by means of a specially designed transformer to create a high voltage pulse according to the present invention.

The receiver, situated in the SCM unit, of signals from LMS and/or SIU modules is disconnected only during those time slots where a transmission is ongoing. This implies that transmitters and receivers should be time synchronized, the accuracy should be in the range of 0.1 ms. For one skilled in the art it would have been natural to employ zero crossings for the synchronization of time slots to the net frequency. Unfortunately, such an approach has disadvantages pertaining to additional zero crossings due to harmonics with superimposed noise. In order to overcome such disadvantages the present invention discloses an embodiment for an inventive solution for synchronizing a time slot to said half cycles.

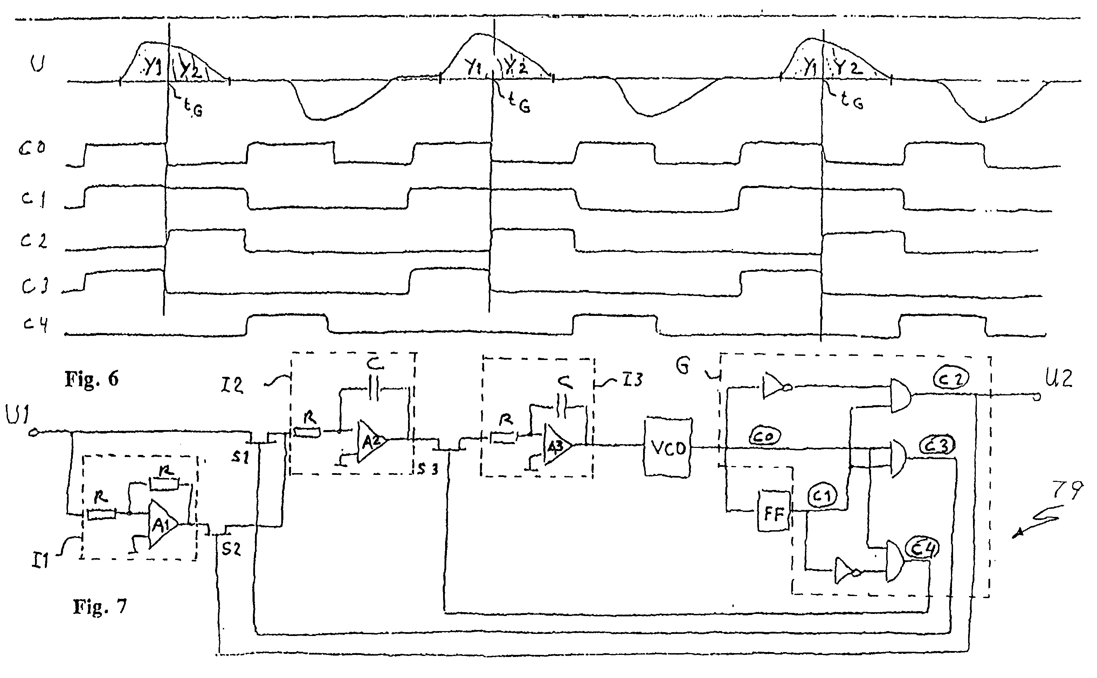

With reference to Fig. 6, one preferred solution relies on a method for determination of the center of gravity for that specific time t_{G} of the net frequency where the area beneath the curve for the half cycle is equal on both sides of t_{G}, i.e., the area to the left of t_{G} is expressed as Y1 and is equal to the area to the right of time t_{G} expressed as Y2. Note that the area around t_{G} is non symmetrical because of the modulation of the current from the current generator. Both transmitters and receivers are bound to compute the position of the center of gravity and thereby positioning the time slot for communication in relation to the time t_{G}.

The circuit according to Fig. 7 illustrates an inventive circuit embodiment for synchronization of time slots in relation to the time t_{G} for a supposed center of gravity according to Fig. 6.

There are other possible embodiments regarding synchronization within the scope of the present invention for one skilled in the art, including software solutions. Further solutions for synchronization between a SCM unit 14 and LMS/SIU modules could be such as filtering each half cycle signal, for example, with a suitable band-pass filter and using the time when e.g. half the peek value is recalled, possibly in combination with a phase locked loop technique. It is also within the scope of the present invention to claim such solutions for a message transfer system relating to lighting systems, especially systems for airfields.

With reference to Fig. 6 and Fig. 7, Fig. 7 illustrates a circuit 79 for generating a square wave C0 which frequency equals the double net frequency and which phase is such that its negative-edge coincides with the centre of gravity at the time t_{G}. An operational amplifier A1 is connected as an inverter I1. A2 and A3 are amplifiers connected as integrators (I2, I3). S1, S2 and S3 are semiconductor switches. FF is a flip-flop used as a frequency divider and VCO is an Voltage Controlled Oscillator. When C3 is high S1 leads and the integrator A2 integrates the area Y1, and when C2 is high S2 leads and A2 integrates the area Y2, but with reversed sign so that the output voltage from A2 at the C2 negative-edge is proportional to Y2-Y1. During the time when C4 is high, S3 is conducting, and if the output voltage from A2 is separated from zero, the output voltage from A3 will increase or decrease depending on the polarity of the A2 output voltage. Thus, the VCO will increase or decrease its output frequency. An output voltage from A3 will stay constant when the C0 frequency is equal to the double net frequency and the phase for C0 is such that Y1=Y2. The feed back of signals C2, C3, C4 is accomplished through a gate circuit G.

Still referring to Fig. 6 and Fig. 7. In general any apparatus for synchronization of pulse signals to modulated a.c. net frequency half cycles performing the following in order to determine the time t_{G} that sets the centre of gravity for an a.c. half cycle amplitude signal can be used. The apparatus should have means 79 for determining a time t_{G} for which the area Y1 before the time t_{G} is equal to the area Y2 after the time t_{G}. The determination of the time t_{G} is performed with reference to an appropriate preset time at the beginning of a repeated cycle for determining the time t_{G}.

Further, said apparatus should comprise means 79 for continuous synchronization of pulse signals to modulated a.c. net frequency half cycles for determining a time t_{G} for which the amplitude signal area Y1 before said time t_{G} is equal to the amplitude signal area Y2 following said time t_{G}. Said means 79 should comprise first means I2 for integration of said half cycles signal amplitude areas Y1, Y2 for the area Y1 during a preset time and for the area Y2 for the remaining half cycle time following said preset time. The next measure taken is to compare the integrations with means I1, I2 for comparing the areas of the integrated amplitude signals, applying the output from the comparison to control means I3 for controlling said preset time to be offset by means FF, G. The offset is inducing control towards said time t_{G}. Integration is repeated until said areas Y1, Y2 are equal in order to find the time t_{G} and use it as reference for synchronization of pulse signals.

A preferred preset times starting value could be the time for 1/4 of the cycle duration time of an unmodulated sinusoidal a.c. net frequency signal, i.e. 5 ms for 50 Hz and approximately 4,17 ms for 60 Hz.

An apparatus as described above could be used in the main control system of an airfield lighting system connected to a series cable for time slot synchronization to a.c. net frequency half cycles.

It is most probably correct to assume that a part around or adjacent to a centre of gravity for a modulated a.c. net frequency half cycles amplitude signal contains less distortions then other parts, for example, parts nearby a zero crossing of a modulated signal.

The encoding of the communicated signals relies on the synchronization to the net frequency and on a specific way of employing the time slots where every half cycle of the net frequency contains a time slot. Message transfer or communication is conducted according to a master/slave principle where a SCM is the master and the distributed LMS/SIU modules are slaves. A SCM sends orders, addressing the LMS and/or SIU modules group related, and where the LMS/SIU modules respond with their status information (ON or OFF) in order each one half cycle in a time slot. The SCM sends messages (SCM messages) in programmable (i.e. number of time slots) time intervals, for example, one message every 30:th half cycle. A message could among others contain a message number, an order and an address to the specific LMS group for which the message is intended. Each and every of the 30 time slots after a SCM message has a time slot number that is determined by the SCM message number and the specific sequence number for the time slot, i.e., its position following the SCM message. In this specific embodiment, at most 30 LMS are able to reply after a SCM message, thereafter a new SCM message is sent.

In conjunction with the installation of the message and monitoring method and system according to the present invention, every LMS/SIU module is assigned one or more group addresses and one or more time slots during which the LMS/SIU modules should respond with their status information, for example, ON, OFF or FAILURE. This means that SIU modules with a requirement of a fast reply, for example, sensor equipped SIU modules, are assigned at least one time slot for every SCM message number, hence other LMS modules are assigned one time slot belonging only to one specific SCM message number. As mentioned, the SCM message is transmitted according to even time intervals, but the message number can be chosen such that the subsequent time slots contain answers from the LMS/SIU modules that for the time being are required an answer. When, for example, an order is sent, and addressed to a specific group, a reply from this group is expected as soon as possible as a receipt of the order and its acceptance. The message transfer sequences will be explained more in detail below.

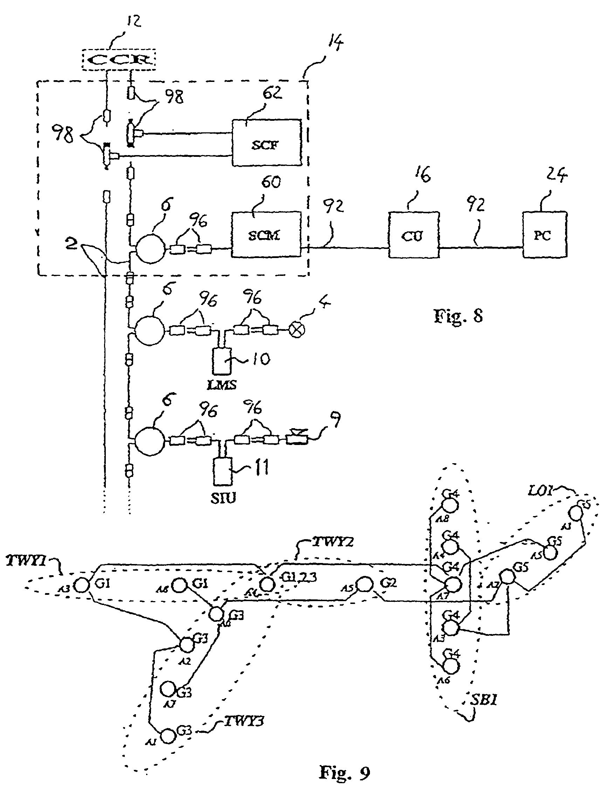

Now with reference to Fig. 8 illustrating a series circuit 2 with its connectors and interfaces according to the invention. The light monitor switch system is designed for use in an airfield lighting control and can be integrated in existing series circuits. A small electronic module LMS and/or SIU module (SIU doted in Fig. 8) is attached to each load 4, 9 that is to be individually monitored and/or switched on/off. High frequency signals superimposed on the power mains are used for communication between entities. Thus, no additional cabling on the field is needed.

In this preferred embodiment, the system is specified for series circuits working with a current range of approximately 2.8-6.6 A and voltages up to 5 kV.

The LMS/SIU module is an individually addressable module where every module has its own set of parameters, defining its working range including its unique identity. Parameters will be described and listed below.

The SCM unit relays communication signals to and from the series circuits from modules such as LMS 10/SIU 11. It receives and transmits blocks of data from or to a CU unit 16 via, for example, RS-232C series communication cable 2.

Hence, the CU 16 distributes and collects information to and from respectively, a number of SCM units 60 depending on system complexity. The CU 16 itself communicates with either another CU 16 or another unit such as a personal computer (PC) 24,25 or other central processor based units depending on system complexity.

A series circuit filter (SCF) 62 prevents high frequency communication signals from reaching the CCR 12 of the circuit.

Transformers 6 are e.g. of the type Isolation Transformer FAA 830, 200 W. The LMS, SCF and SCM connectors 96 are e.g. of the type L-823. Further, the SCF connection 98 is accomplished with T-adapters across the CCR output.

Fig. 9 illustrates an Airfield Smart Part®(ASP) controlled airfield lighting system.

Each assembly of lights that are to be operated as a group, separate from other assemblies, is given an alphanumeric "Light function" designation TWY1, TWY2, TWY3, LO1, SB1 etc. Examples of such assemblies are stopbars (SB), lead on (LO) and taxiway (TWY) segments in a taxiway guidance system. In this embodiment each light may be part of up to four light function assemblies. Fig. 9 depicts a light connected to three light functions (G1,2,3).

A light function assembly may consist of lights connected to different series circuits. All lights attached to a series circuit, belonging to the same light function, are given a group address (G1, G2, G3, G4, G5) that is unique for that light function on that specific circuit.

All lights are given an individual address (A1, A2,..., A7, A8), unique for the circuit to which the light is attached. So called light fixtures with two, separately controlled lamps are given one address for each lamp.

Sensors in an ASP controlled airfield lighting system are designated as follows.

Each assembly of sensors, that are to be operated as a group, generally a transmitter and a receiver, is given an alphanumeric "Sensor function" designation.

A sensor 9 may have one or more inputs for self-testing e.t.c. Each sensor 9 input (maximum four in this embodiment) is given a group address, unique for the series circuit to which the sensor is attached. The sensor is attached via a Sensor Interface Unit (SIU) which is connected to the series circuit via an isolation transformer 4 and which communicates with the SCM 60 in the same way as LMS/SIU modules 10, 11.

All sensors are given an individual address, unique for the circuit to which its receiver is attached. In this embodiment, each receiver can have up to three inputs and four outputs that can be controlled with the address.

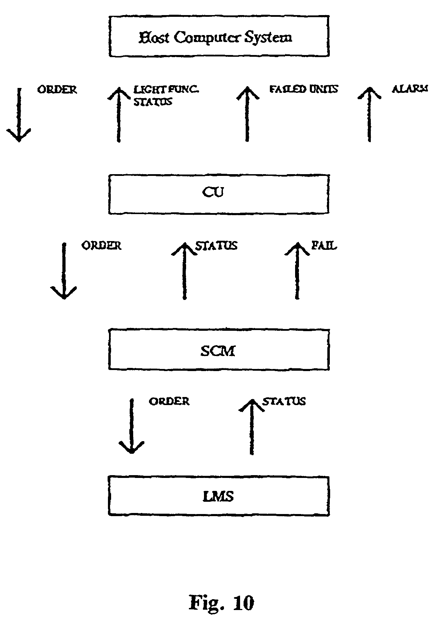

Information exchange is performed according to the structure shown in Fig. 10, the arrows are showing the exchange flow. The uppermost box in the figure constitutes the higher system level.

Communication between different levels is of the master/slave type, where the higher level always is the master. The master is polling the slaves, evaluating the answers and, if a specific programmed condition is fulfilled, the polling sequence is interrupted and an order is sent downward the system, whereby evaluation of entered or set conditions is performed at as low system level as possible. In order to achieve short response times, information is condensed as much as possible before it is transferred upward in the system. Consequently, requirements on the channel for transmission of information can be kept on a low basis. In general only information about changes in status is transferred from one level to another. For example, information on the status of individual lights is only sent upwards in the system in case of a light failure. As long as the lamp is working, its status may be decided from the status of the light functions to which it belongs.

A protocol used for interfacing the communication to an external host system could be of the standard type, e.g., Allen-Bradley Data Highway+ or Omron Sysway System. As for protocols used for communication between CU and SCM and between LMS modules 10 or SIU modules 11 they are proprietary. Dependent on the application a RS-232, RS-485, short-haul modem or fiber optic modem may be chosen.

As for the communication between LMS/SIU modules and SCM units 60, signals are synchronized to the net frequency such that one bit is sent each half cycle where each bit consists of a burst of pulses. The frequencies in this preferred embodiment are chosen from, for example, the range 4-7 kHz as follows:

| | |
|---|---|
| From SCM: | "1"=f1 (frequency 1) |
| | "0"=f3 (frequency 3) |

| | |
|---|---|
| From LMS | "1"=f2 (frequency 2) |
| | "0"=f3 (frequency 3) |

SCM 60 frequently sends synchronizing signals, according to one of the methods described below, with or without orders to the LMS and/or SIU modules. LMS and/or SIU modules respond, one after the other during the time slot (half cycle) that is given by an individual address for an LMS or SIU. According to this manner, the LMS or SIU modules respond with a "1" if a load is ON and a "0" if it is OFF. In case of a load 4, 9 failure no respond signal is transmitted.

There exist two types of synchronizing signals: The "Shortsync" (SS) and the "Longsync" (LS). When no orders are transmitted an SS is repeatedly transmitted for LMS/SIU modules monitoring purposes. An LS contains an order which is only transmitted when a new order is to be carried out and it is repeated until satisfactory responses are received from the LMSISIU module. The SS and the LS are both numbered from #1 to #8in this embodiment, but preferably programmable.

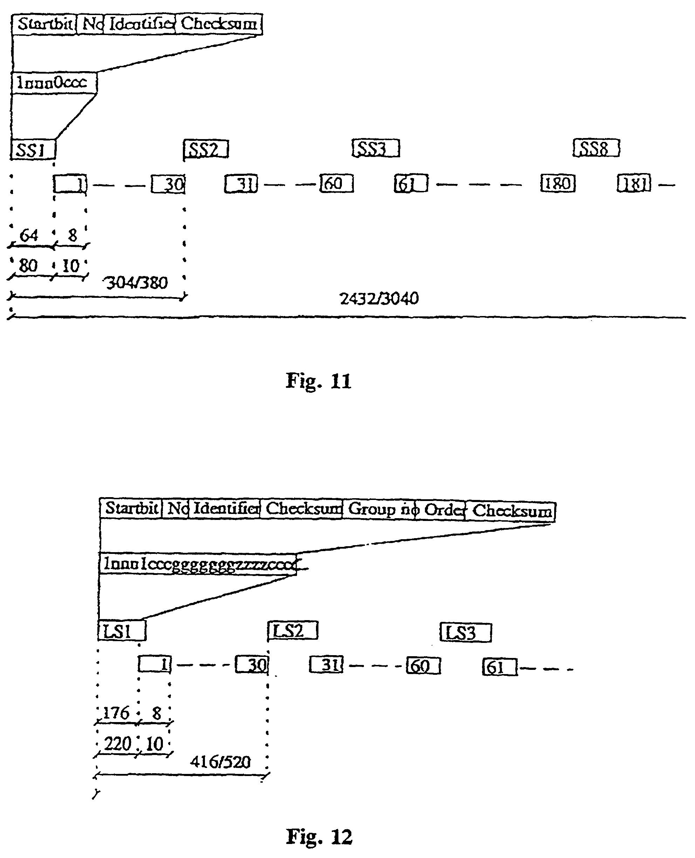

Now referring to Fig. 11 for an illustration of the Shortsync procedure. The time between Shortsyncs is given by the number of occupied time slots between synchronization-words (sync-words). It is preferred that each LMS or SIU module can be allotted two time slots following each one of the eight possible sync-words, but generally only one time slot following one of the eight sync-words is allotted to an LMS.

Considering a sensor 9 as a load, a SIU generally is allotted one time slot after each one of the eight sync-words. Fig. 11 depicts an example where a total of 240 time slots are used for communication which corresponds to an airfield lighting system with e.g. 240 LMS modules or 160 LMS modules and 10 SIU modules. The time period for a net frequency of 60/50 Hz regarding one sync-word and 30 time slots is 304 or 380 ms respectively, and the total for eight sync-words and 240 time slots is 2432 or 3040 ms respectively. As mentioned, sync-words are transmitted and time slots are allotted repeatedly. Therefore, sync-word #1 is sent after the elapsing of time slot 240 and the procedure is cyclically repeated in a steady state sequence, if not interrupted by a Longsync.

Still referring to Fig. 11 for an explanation of the fields in the Short-sync which are Startbit, No, Identifier and Checksum [Startbit No Id CRC]. The Shortsync contains 8 bits, one bit for the startbit, 3 bits for No (nnn), one bit for Id and 3 bits for the checksum (ccc). The startbit "1" corresponds to a frequency used only by the SCM units and not by the LMS and/or SIU modules. The three number bits nnn decide from which LMS a response is requested and the Id field corresponds to [0 = Shortsync]. To minimize the risk of false detection due to distances a checksum (ccc) according to a Cyclic Redundancy Code (CRC) is added. CRC codes are well known in the art, hence a detailed description of the technique is omitted.

Referring to fig. 12 for the transmission of LS. When an order is to be transmitted, the steady state sequence is disrupted, except for that the last transmitted Shortsync number sequence is allowed to finish, for instance sequence #7 if applicable. Subsequently, the Longsync-word with the appropriate order is transmitted, whereby the synchronization number (sync #) is chosen such that it corresponds to when the addressed group has a time slot to respond within.

See Fig. 12 for an explanation of the fields in the LS which are Startbit, No, Identifier, Checksum, Group No, Order and Checksum [Startbit, No, Id, CRC1, Groupadr, Order, CRC2]. The LS contains 23 bits, one bit for the startbit, 3 bits for No (nnn), one bit for Id and 3 bits for the checksum (ccc). The three number bits nnn decide from which LMS and/or SIU a response is requested and the Id field corresponds to [1 = Longsync]. To ensure a first checksum (ccc) a CRC code is added for detection of faults in the No and Id fields. The Group address contains 7 bits (ggggggg) for addressing the order to the intended group. Next field contains the specific order through 4 bits (zzzz). An order, for example, can be of the type (0000) meaning turn on lamp, (0001) turn off lamp, (0010) flash lamp, etc. The last 4 bits in the second CRC field are determined and calculated through a polynomial named CRC-BCH = x⁴+x+1

The LMS and/or SIU modules have their own sets of parameters which are defined through two blocks. Block 1 contains the parameters Timeslot and Group Addr and are downloaded during initialisation or changing of system configuration. The time slot approach has been covered above. Group Addr defines which group order to react upon. Since an LMS may be a part of several groups, up to four group addresses (A-D) in this embodiment may be defined. In practice this means that a LMS that has its group address set to, for example (10, 64, 0, 0,) responds to orders received when the group address for the order is 10 or 64.

A second block (block 2) in this embodiment contains, for example, the following parameters:
**Destination Group Adr -** Parameter block 2 is downloaded to all LMS and/or SIU modules that have one of their group addresses set to a number corresponding to the Destination Group Address in parameter block 2;
**Default -** Default status (on = 1/off=0) for the LMS and/or SIU modules when the series circuit is powered up;
**Inverse Func -** States that the LMS shall accomplish the opposite of an on/off order, i.e. turn on the lamp when the order is off and vice versa (no inverse function =0, inverse function=1);
**Safe Status -** If communication is interrupted for a time longer than the time specified below through the parameter Timeout, the LMS and/or SIU shall switch the lamp On=1, Off=0 or NoChange=2 according to this setting;
**Min ALC f**_{**1**} **-** Minimum signal level for detection of received data "0"; and
**Min ALC f**_{**3**} **-** Minimum signal level for detection of received data "1".

A steady state sequence is given by Shortsync#1 Shortsync#2...Shortsync#8 Shortsync#1 Shortsync#2... e.t.c. The time between the shortsyncs is given by the number of occupied time slots between the syncwords. Time slot 0 is represented by the first half net cycle after the Shortsync. A possible modification to the steady state sequence is, if there is a missing response from a previously responding LMS, the same Shortsync# could be repeated. If the response from the LMS is still missing after the repetition, the connected lamp (load) is assumed to have failed.

When an order sequence is to be transmitted, the steady state sequence is disrupted except for that the last Shortsync#-sequence is allowed to be finished and a Longsync-word with an appropriate order is sent. The sync# is chosen such that responses from the addressed group are achieved immediately after the Longsync. A possible modification is, unless LMS or SIU modules in the addressed group respond with correctly changed status, that the same longsync-word is repeated.

If an LMS and/or SIU has received a download order, the checksum is controlled. In case of parameter block 1, it is also checked if a lamp or load is disconnected. If that is the case, and if a Longsync-word is received after the parameter block (as a check of communication), the new parameters are stored in the LMS or SIU modules EEPROM. Otherwise the modules are reset and the previously used parameters are used. If two Shortsyncs are received before a Longsync, the LMS and/or SIU are also reset.

At a reset, the parameters stored in the EEPROM are loaded into a workmemory and a checksum is calculated and compared with the checksum stored in the EEPROM. Then, if a checksum-error is detected, the lamp is turned off, slot addresses and group addresses are removed and the other parameters are set to the default values, as given.

The checksum is calculated for parameter block 2 plus group addresses 1-4 using CRC-CCITT. This 2-byte checksum is stored in the EEPROM. Download parameters can be controlled by means of "checksum-questions" and used for comparison with the two bytes in the "checksum-question" where the most significant bit in each byte is disregarded.

Although the foregoing specification describes only the embodiments of this invention shown and/or described, it should be clear that other embodiments may be articulated as well.

Thus, the terms and expressions used herein serve only to describe the invention by example and not to limit the invention. In particular, any of the specific constructional elements described may be replaced by any other known elements having equivalent function.

## Claims

1. Method of transfer of control and monitoring information between a main control (14, 16, 24) and at least one addressable light monitor switch module (10) or sensor interface unit module (11), wherein
each light monitor switch module (10) and sensor interface unit module (11) are connected to the secondary side of each dedicated isolation transformer (6) which primary side is connected in series to a power cable (2) fed with an a.c. net frequency current by constant current generator (12) having a filter (62) connected preventing high frequency signals from reaching the constant current generator, and
the transfer signals being superimposed on the a.c. net frequency current to achieve control and monitoring of loads (4, 9) in airfield lighting systems,
a part of the a.c. net frequency half cycles constitute time slots for message transfer with superimposed high frequency high voltage pulses which are bearers of data in each time slot,
the pulses arise on the primary transformer side through short interruptions of a series circuit (30) controlled by a control switch (32) on the secondary side, the interruptions create a controlled high impedance, whereby the interruptions take place within the time slot, the total of interruptions, each creating a high voltage pulse, on the primary transformer side constituting a pulse signal for transferring the data,
the transfer enabling control of load functions and reading the state of loads,
the time slots being synchronized to the part of the a.c. net frequency current determined to contain almost no or little distortions in comparison with the pulse signals.

2. Method according to claim 1, **characterized in that** a pulse signal carries one digital data bit in each time slot whereby the pulse signal contains a burst of high voltage pulses superimposed on a.c. net frequency half cycles.

3. Method according to claim 1 and 2, **characterized by** determining the center of gravity for the a.c. net frequency half cycles and using it as a reference for synchronization of the time slots through determination of a time (t_{G}) for which the net frequency signal amplitude area on both sides of the net frequency half cycle is equal on the sides.

4. Method according to claim 3, **characterized in that** the determination of the time (t_{G}) is conducted through integration of the areas (Y1, Y2) one by one, comparing the areas, determining the offset and repeatedly integrating until they match each other.

5. Method according to any previous claim, **characterized in that** all loads (4, 9) connected to the series circuit are given an individual address, unique for the circuit to which the load is attached.

6. Method according to claim 5, **characterized in that** light fixtures with separately controlled lamps are given one address for each light fixture lamp.

7. Method according to claim 5 and 6, **characterized in that** each assembly of loads which are to be operated as a group, separate from other assemblies is given an alpha numeric load function designation (TWY1, LO1, SB1).

8. Method according to claim 7, **characterized in that** each light monitor switch module (10) and sensor interface module (11) is assigned one or more group address which group addresses belong to each a specific load function.

9. Method according to claim 8, **characterized in that** the modules are assigned one or more time slots (TS) during which they should respond with their status information.

10. Method according to any previous claim, **characterized in that** the sequences for establishing transmission of monitoring and control information in both directions on series cables between communicating entities are constituted by cyclically transmitting a number of synchronizing signals of a first and a second type from the main control (14), each number being programmable, each of the synchronizing signals being followed by a programmable number of time slots (TS).

11. Method according to claim 10, **characterized in that** the first type of synchronizing signal triggers a sequence used for monitoring purposes and that the second type of synchronizing signal triggers a sequence where orders are to be transmitted.

12. Method according to claim 11, **characterized in that** the second type of synchronizing signal has priority over the first type of synchronizing signal thus allowed to break the first type of synchronizing signal sequence when orders are to be transmitted.

13. Method according to claim 12, **characterized in that** time slots following the first synchronizing signal are allowed to be finished.

14. Method according to claim 13, **characterized in that** the second synchronizing signal is chosen such that responses from addressed groups are achieved immediately after the second synchronizing signal.

15. Method according to claims 9 to 14, **characterized in that** in case of a missing response from a previously responding light monitor switch module (10) or sensor interface module (11) the same synchronization signal in the programmable number is repeated and upon a still missing response, the load is assumed to have failed.

16. System adapted to transfer of control and monitoring information between a main control (14, 16, 24) and at least one addressable light monitor switch module (10) or sensor interface unit module (11), wherein
each light monitor switch module (10) and sensor interface unit module (11) is connected to the secondary side of each series isolation transformer (16) of which the primary side is connected in series to a power cable (2) fed with an a.c. net frequency current by a constant current generator (12) having a filter (62) connected to prevent high frequency signals from reaching the constant current generator, and
the transfer signal is superimposed on the a.c. net frequency current to achieve control and monitoring of loads (4, 9) in airfield lighting systems,
a part of the a.c. net frequency half cycles constitute time slots for a message transfer with superimposed high frequency high voltage pulses which are bearers of data in each time slot,
the pulses arising at the primary transformer side through short interruptions of a series circuit (30) controlled by a control switch (32) on the secondary transformer side, the interruptions creating a controlled high impedance whereby the interruptions take place within the time slot, the total of interruptions, each creating a high voltage pulse on the primary transformer side, constituting a pulse signal for transferring the data, wherein
a main control (14, 16, 24) is adapted to use the transfer of data for the control of load functions and reading the state of loads,
a series circuit modem (60) connected to the series isolation transformer (6) is adapted to synchronize the time slots to the part of the a.c. net frequency current determined to contain almost no or little distortions in comparison with the pulse signals, whereby the high voltage pulses are generated through existing series isolation transformers (6) through the light monitor switch module (10) and the sensor interface unit module (11).

17. System according to claim 16, **characterized in that** a pulse signal carries one digital data bit in each time slot whereby the pulse signal contains a burst of high voltage pulses superimposed on a.c. net frequency half cycles.

18. System according to claim 16 and 17, **characterized by** means (79) adapted to determine the center of gravity for the a.c. net frequency half cycles and using it as a reference for synchronization of the time slots through determination of a time (t_{G}) for which the net frequency signal amplitude area on both sides of the net frequency half cycle is equal on the sides.

19. System according to claim 18, **characterized in that** the means (79) is adapted to determine the time (t_{G}) through integration of the areas (Y1, Y2) one by one, comparing the areas, determining the offset and repeatedly integrating until they match each other.

20. System according to claims 16 to 19, **characterized in that** all loads (4, 9) connected to the series circuit use an individual address, unique for the circuit to which the load is attached.

21. System according to claim 20, **characterized in that** light fixtures with separately controlled lamps use one address for each light fixture lamp.

22. System according to claim 20 and 21, **characterized in that** each assembly of loads which are to be operated as a group, separate from other assemblies, use an alpha numeric load function designation (TWY1, LO1, SB1).

23. System according to claim 22, **characterized in that** each light monitor switch module (10) and sensor interface module (11) is assigned one or more group address(es) belonging to each a specific load function.

24. System according,to claim 23, **characterized in that** the modules are assigned one or more time slots (TS) during which they should respond with their status information.

25. System according to claims 16 to 24, **characterized in that** the sequences for establishing transmission of monitoring and control information in both directions on series cables between communicating entities are constituted by cyclically transmitting a number of synchronizing signals of a first and a second type from the main control (14), each number being programmable, each of the synchronizing signals being followed by a programmable number of time slots (TS).

26. System according to claim 25, **characterized in that** the first type of synchronizing signal triggers a sequence used for monitoring purposes and that the second type of synchronizing signal triggers a sequence where orders are to be transmitted.

27. System according to claim 26, **characterized in that** the second type of synchronizing signal has priority over the first type of synchronizing signal thus allowed to break the first synchronizing signal sequence when orders are to be transmitted.

28. System according to claim 27, **characterized in that** time slots following the first synchronizing signal are allowed to be finished.

29. System according to claim 28, **characterized in that** the second synchronizing signal is chosen such that responses from addressed groups are achieved immediately after the second synchronizing signal.

30. System according to claims 24 to 29, **characterized in that** in case of a missing response from a previously responding light monitor switch module (10) or sensor interface module (11) the same synchronization signal in the programmable number is repeated and upon a still missing response, the load is assumed to have failed.

31. System according to claim 18, **characterized in that** the means (79) for determining a time (t_{G}) comprises first means (I2) for integration of the half cycles signal amplitude areas (Y1, Y2) for the area (Y1) during a preset time and for the area (Y2) for the remaining half cycle time following the preset time, comparing the integrations with means (I1, I2) for comparing the areas of the integrated amplitude signals, applying the output from the comparation to control means (I3) for controlling the preset time to be offset by means (FF, G) for offsetting towards the time (t_{G}), repeating the integration until the areas (Y1, Y2) are equal in order to find the time (t_{G}) and use it as reference for the synchronization of the time slots.

32. System according to claim 31, **characterized in that** the preset times starting value is the time for ¼ of the cycle duration time of an unmodulated sinusoidal a.c. net frequency signal, i.e. 5 ms for 50 Hz and approximately 4.17 ms for 60 Hz.

## Patentansprüche

1. Verfahren für die Übertragung von Steuer- und Überwachungsinformation zwischen einer Hauptsteuerung (14, 16, 24) und zumindest einem adressierbaren Lichtüberwachungs-Schaltmodul (10) oder einem Sensorschnittstellen-Einheitsmodul (11), wobei
jedes Lichtüberwachungs-Schaltmodul (10) und Sensorschnittstellen-Einheitsmodul (11) zu der Sekundärseite jedes dedizierten Isolationstransformators (6) verbunden ist, dessen Primärseite in Serie mit einem Energiekabel (2) verbunden ist, dem ein AC-Netzfrequenzstrom durch einen Konstantstromgenerator (12) zugeführt wird, mit einem Filter (62), der so angeschlossen ist, dass er vermeidet, dass hochfrequente Signale den Konstantstromgenerator erreichen, und
die Transfersignale auf dem AC-Netzfrequenzstrom überlagert sind, zum Erzielen einer Steuerung und einer Überwachung der Lasten (4, 9) in Flugplatz-Beleuchtungssystemen, wobei
ein Teil der AC-Netzfrequenz-Halbzyklenzeitschlitze für den Meldungstransfer mit überlagerten Hochfrequenz-Hochspannungspulsen als Träger der Daten in jedem Zeitschlitz überlagert sind,
die Pulse an der Primärtransformatorseite durch kurze Unterbrechungen einer Serienschaltung (30) auftreten, gesteuert durch einen Steuerschalter (32) an der Sekundärseite, und die Unterbrechungen eine gesteuerte hohe Impedanz erzeugen, wodurch die Unterbrechungen in dem Zeitschlitz stattfinden, wobei bei der Gesamtzahl der Unterbrechungen jede einen Hochspannungspuls an der Primärtransformatorseite zum Bilden eines Pulssignals zum Übertragen der Daten erzeugt,
der Transfer eine Steuerung der Lastfunktionen und ein Wesen des Zustands der Lasten ermöglicht, und
die Zeitschlitze mit dem Teil des AC-Netzfrequenzstroms synchronisiert sind, der so bestimmt ist, dass er nahezu keine oder geringe Verzerrungen im Vergleich mit den Pulssignalen enthält.

2. Verfahren nach Anspruch 1, **dadurch gekennzeichnet, dass** ein Pulssignal ein digitales Datenbit in jedem Zeitschlitz trägt, wodurch das Pulssignal ein Bündel von Hochspannungspulsen, überlagert auf die AC-Netzfrequenzhalbzyklen enthält.

3. Verfahren nach Anspruch 1 oder 2, **gekennzeichnet durch** das Bestimmen des Schwerpunkts der AC-Netzfrequenzhalbzyklen und Verwenden desselben als Referenz zum Synchronisieren der Zeitschlitze über die Bestimmung einer Zeit (t_{G}), bei der der Netzfrequenz-Signalamplitudenbereich auf beiden Seiten des Netzfrequenzhalbzyklus auf den Seiten gleich ist.

4. Verfahren nach Anspruch 3, **dadurch gekennzeichnet, dass** die Bestimmung der Zeit (t_{G}) ausgeführt wird durch die Integration der Bereiche (Y1, Y2), in einzelner Weise, durch Vergleichen der Bereiche, durch Bestimmen des Versatzes und durch wiederholtes Integrieren, bis sie zueinander abgestimmt sind.

5. Verfahren nach einem der vorangehenden Ansprüche, **dadurch gekennzeichnet, dass** an alle Lasten (4, 9), die mit der Serienschaltung verbunden sind, eine individuelle Adresse vergeben wird, die für die Schaltung eindeutig ist, an die die Last angebracht wird.

6. Verfahren nach Anspruch 5, **dadurch gekennzeichnet, dass** an Beleuchtungsarmaturen mit getrennt gesteuerten Lampen eine Adresse für jede Beleuchtungsarmaturlampe vergeben wird.

7. Verfahren nach Anspruch 5 und 6, **dadurch gekennzeichnet, dass** jeder Aufbau von Lasten, die als eine Gruppe zu betreiben sind, getrennt von anderen Aufbauten, mit einer alphanumerischen Lastfunktionsbezeichnung (TWY1, LO1, SB1) versehen wird.

8. Verfahren nach Anspruch 7, **dadurch gekennzeichnet, dass** jedem Lichtüberwachungs-Schaltmodul (10) und Sensorschnittstellenmodul (11) eine oder mehrere Gruppenadressen zugewiesen wird, wobei die Gruppenadressen zu jeweils einer spezifischen Lastfunktion gehören.

9. Verfahren nach Anspruch 8, **dadurch gekennzeichnet, dass** den Moduln ein oder mehrere Zeitschlitze (TS) zugewiesen werden, während denen sie mit ihrer Statusinformation antworten sollten.

10. Verfahren nach einem der vorangehenden Ansprüche, **dadurch gekennzeichnet, dass** die Sequenzen zum Einrichten einer Übertragung von Überwachungs- und Steuerinformationen entlang beider Richtungen auf seriellen Kabeln zwischen Kommunikationseinheiten durch zyklisches Übertragen einer Zahl von Synchronisiersignalen eines ersten und eines zweiten Typs von der Hauptsteuerung (14) gebildet werden, wobei jede Zahl programmierbar ist, und jedem der Synchronisiersignale eine programmierbare Zahl der Zeitschlitze (TS) folgt.

11. Verfahren nach Anspruch 10, **dadurch gekennzeichnet, dass** der erste Typ des Synchronisiersignals eine Sequenz triggert, die für Überwachungszwecke verwendet wird, und dass der zweite Typ von Synchronisiersignal eine Sequenz triggert, bei der Befehle zu übertragen sind.

12. Verfahren nach Anspruch 11, **dadurch gekennzeichnet, dass** der zweite Typ von Synchronisiersignal Priorität gegenüber dem ersten Typ des Synchronisiersignals genießt, und es demnach den ersten Typ der Synchronisiersignalfolge unterbrechen kann, wenn Befehle zu übertragen sind.

13. Verfahren nach Anspruch 12, **dadurch gekennzeichnet, dass** Zeitschlitze, die dem ersten Synchronisiersignal folgen, abgeschlossen werden können.

14. Verfahren nach Anspruch 13, **dadurch gekennzeichnet, dass** das zweite Synchronisiersignal so gewählt wird, dass Antworten von den adressierten Gruppen unmittelbar nach dem zweiten Synchronisiersignal erzielt werden.

15. Verfahren nach Anspruch 9 bis 14, **dadurch gekennzeichnet, dass** im Fall einer fehlenden Antwort von einem zuvor antwortenden Lichtüberwachungs-Schaltmodul (10) oder einem Sensorschnittstellenmodul (11) dasselbe Synchronisiersignal in der programmierbaren Zahl wiederholt wird, und bei einer immer noch fehlenden Antwort von einem Fehler bei der Last ausgegangen wird.

16. System angepasst für den Transfer von Steuer- und Überwachungsinformation zwischen einer Hauptsteuerung (14, 16, 24) und zumindest einem adressierbaren Lichtüberwachungs-Schaltmodul (10) oder Sensorschnittstellenmodul (11), wobei
jedes Lichtüberwachungs-Schaltmodul (10) und Sensorschnittstellenmodul (11) mit der Sekundärseite jedes Serienisolationstransformators (16) verbunden ist, von dem die Primärseite in Serie mit einem Energiekabel (12) verbunden ist, dem ein AC-Netzfrequenzstrom durch
einen Konstantstromgenerator (12) zugeführt wird, mit einem Filter (62), angeschlossen zum Vermeiden, dass Hochfrequenzsignale den Konstantstromgenerator erreichen, und
der Transfer eines Signals auf dem AC-Netzfrequenzstrom überlagert ist, zum Erzielen einer Steuerung und Überwachung von Lasten (4, 9), in Flughafen-Beleuchtungssystemen, wobei
ein Teil der AC-Netzfrequenz-Halbzyklen Zeitschlitze für einen Meldungstransfer mit überlagerten Hochfrequenz-Hochspannungspulsen bildet, die Träger von Daten in jedem Zeitschlitz sind,
die Pulse bei der Primärtransformatorseite durch kurze Unterbrechungen einer Serienschaltung (30) - gesteuert durch einen Steuerschalter (32) auf der Sekundär-Transformatorseite - auftreten, wobei die Unterbrechungen eine gesteuerte hohe Impedanz erzeugen, wodurch die Unterbrechungen in dem Zeitschlitz auftreten, wobei die Gesamtheit der Unterbrechungen jeweils einen Hochspannungspuls an der Primär-Transformatorseite erzeugen, zum Bilden eins Pulssignals zum Transferieren der Daten, wobei
eine Hauptsteuerung (14, 16, 24) angepasst ist zum Verwenden des Transfers der Daten für die Steuerung von Lastfunktionen und zum Lesen des Zustands der Lasten, ein Serienschaltungsmodem (60), verbunden mit dem Serienisolationstransformator (16), angepasst ist zum Synchronisieren der Zeitschlitze zu dem Teil des AC-Netzfrequenzstroms, der so bestimmt ist, dass er nahezu keine oder geringe Verzerrungen im Vergleich zu den Pulssignalen aufweist, wodurch die Hochspannungspulse durch existierende Serienisolationstransformationen (6) durch das Lichtüberwachungs-Schaltmodul (10) und das Sensorschnittstellen-Einheitsmodul (11) erzeugt werden.

17. System nach Anspruch 16, **dadurch gekennzeichnet, dass** ein Pulssignal ein digitales Datenbit in jedem Zeitschlitz führt, wodurch das Pulssignal ein Bündel von Hochspannungspulsen überlagert über AC-Netzfrequenz-Halbzyklen enthält.

18. System nach Anspruch 16 und 17, **gekennzeichnet durch** eine Vorrichtung (79) angepasst zum Bestimmen des Schwerpunkts der AC-Netzfrequenz-Halbzyklen und zum Verwenden von diesen als Referenz zum Synchronisieren der Zeitschlitze **durch** Bestimmen einer Zeit (t_{G}), für die der Netzfrequenzsignal-Amplitudenbereich auf beiden Seiten des Netzfrequenz-Halbzyklus gleich auf beiden Seiten ist.

19. System nach Anspruch 18, **dadurch gekennzeichnet, dass** die Vorrichtung (97) angepasst ist zum Bestimmen der Zeit (t_{G}) durch Integration der Bereiche (Y1, Y2), in einzelner Weise, sowie zum Vergleichen der Bereiche, zum Bestimmen des Versatzes und zum wiederholten Integrieren, bis sie miteinander abgestimmt sind.

20. System nach Anspruch 16 bis 19, **dadurch gekennzeichnet, dass** alle Lasten (4, 9), verbunden mit der Serienschaltung, eine individuelle Adresse verwenden, die für die Schaltung eindeutig ist, an der die Last anzubringen ist.

21. System nach Anspruch 20, **dadurch gekennzeichnet, dass** Beleuchtungsarmaturen mit getrennt gesteuerten Lampen eine Adresse für jede Beleuchtungsarmaturlampe verwenden.

22. System nach Anspruch 20 und 21, **dadurch gekennzeichnet, dass** jeder Aufbau der Lasten, die als eine Gruppe zu betreiben sind, getrennt von anderen Aufbauten, eine alphanumerische Lastfunktionsbezeichnung verwenden (TWY1, LO1, SB1).

23. System nach Anspruch 22, **dadurch gekennzeichnet, dass** jedem Lichtüberwachungs-Schaltmodul (10) und Sensorschnittstellenmodul (11) eine oder mehrere Gruppenadresse(n) zugewiesen ist, die jeweils zu einer spezifischen Lastfunktion gehört (gehören).

24. System nach Anspruch 23, **dadurch gekennzeichnet, dass** die Moduln eine oder mehrere Zeitschlitze (TS) zugewiesen sind, während denen sie mit ihrer Statusinformation antworten sollten.

25. System nach Anspruch 16 bis 24, **dadurch gekennzeichnet, dass** die Sequenzen zum Einrichten einer Übertragung von Überwachungs- und Steuerinformation entlang beider Richtungen auf Serienkabeln zwischen den Kommunikationseinheiten durch zyklisches Übertragen einer Zahl von Synchronisiersignalen eines ersten und eines zweiten Typs von der Hauptsteuerung (14) gebildet sind, wobei jede Zahl programmierbar ist, und jedem der Synchronisiersignale eine programmierbare Zahl der Zeitschlitze (TS) folgt.

26. System nach Anspruch 25, **dadurch gekennzeichnet, dass** der erste Typ von Synchronisiersignalen eine Folge triggert, die für Überwachungszwecke verwendet wird, und dass der zweite Typ von Synchronisiersignalen eine Folge triggert, bei der Befehle zu übertragen sind.

27. System nach Anspruch 26, **dadurch gekennzeichnet, dass** der zweite Typ von Synchronisiersignal Priorität gegenüber dem ersten Typ von Synchronisiersignal genießt, und demnach die erste Synchronisiersignalfolge dann unterbrechen kann, wenn Befehle zu übertragen sind.

28. System nach Anspruch 27, **dadurch gekennzeichnet, dass** Zeitschlitze, die dem ersten Synchronisiersignal folgen, abgeschlossen werden können.

29. System nach Anspruch 28, **dadurch gekennzeichnet, dass** das zweite Synchronisiersignal so gewählt ist, dass Antworten von adressierten Gruppen unmittelbar nach dem zweiten Synchronisiersignal erzielt werden.

30. System nach Anspruch 24 bis 29, **dadurch gekennzeichnet, dass** im Fall einer fehlenden Antwort von einem zuvor antwortenden Lichtüberwachungs-Schaltmodul (10) oder Sensorschnittstellenmodul (11) dasselbe Synchronisiersignal in der programmierbaren Zahl wiederholt wird, und bei einer immer noch fehlenden Antwort von einem Fehler der Last ausgegangen wird.

31. System nach Anspruch 18, **dadurch gekennzeichnet, dass** die Vorrichtung (79) zum Bestimmen einer Zeit (t_{G}) eine erste Vorrichtung (I2) zum Integrieren der Halbzyklen-Signalamplitudenbereiche (Y1, Y2) enthält, für den Bereich (Y1) während einer voreingestellten Zeit und für den Bereich (Y2) für die verbleibende Halbzykluszeit nach der voreingestellten Zeit, mit einem Vergleich der Integrationsergebnisse mit einer Vorrichtung (I1, I2) zum Vergleichen der Bereiche der integrierten Amplitudensignale, ferner einem Anlegen der Ausgabe von dem Vergleich bei der Steuervorrichtung (I3) zum Steuern der voreingestellten Zeit, die zu versetzen ist, durch eine Vorrichtung (FF, G) zum Erzielen eines Versatzes gegenüber der Zeit (t_{G}), mit einem Wiederholen der Integration, bis die Bereiche (Y1, Y2) gleich sind, zum Auffinden der Zeit (t_{G}) und zum Verwenden derselben als Referenz für die Synchronisation der Zeitschlitze.

32. System nach Anspruch 31, **dadurch gekennzeichnet, dass** der Startwert für die voreingestellten Zeiten die Zeit für ¼ der Zyklusdauerzeit eines nicht modulierten sinusförmigen AC-Netzfrequenzsignals ist, d.h. 5 ms für 50 Hz und näherungsweise 4.17 ms für 60 Hz.

## Revendications

1. Procédé de transfert d'informations de commande et de surveillance entre une commande principale (14, 16, 24) et au moins un module de commutation de moniteur d'éclairage adressable (10) ou un module d'unité d'interface de capteur adressable (11), dans lequel
chaque module de commutation de moniteur d'éclairage (10) et module d'unité d'interface de capteur (11) sont reliés au côté secondaire de chaque transformateur d'isolement spécialisé (6) dont le côté principal est relié en série à un câble d'alimentation (2) alimenté avec un courant de fréquence du réseau alternatif grâce à un générateur à courant constant (12) comportant un filtre (62) relié pour empêcher que des signaux à fréquence élevée n'atteignent le générateur à courant constant, et
les signaux de transfert étant superposés au courant de fréquence du réseau alternatif afin d'obtenir la commande et la surveillance de charges (4, 9) dans des systèmes d'éclairage de terrain d'aviation,
une partie des demi-périodes de fréquence du réseau alternatif constitue des tranches de temps pour le transfert de message avec des impulsions à tension élevée de fréquence élevée superposées qui sont des supports de données dans chaque tranche de temps,
les impulsions se produisent du côté du transformateur principal par l'intermédiaire de courtes interruptions d'un circuit série (30) commandé par un commutateur de commande (32) du côté secondaire, les interruptions créent une haute impédance commandée, d'où il résulte que les interruptions ont lieu à l'intérieur de la tranche de temps, le total des interruptions, chacune créant une impulsion à tension élevée, du côté du transformateur principal constituant un signal d'impulsion en vue de transférer les données,
le transfert permettant la commande des fonctions de charge et la lecture de l'état de charges,
les tranches de temps étant synchronisées sur la partie du courant de fréquence du réseau alternatif déterminée pour contenir presque aucune ou peu de distorsions en comparaison des signaux d'impulsions.

2. Procédé selon la revendication 1, **caractérisé en ce qu'**un signal d'impulsion porte un bit de données numériques dans chaque tranche de temps d'où il résulte que le signal d'impulsion contient des impulsions en rafale à tension élevée superposées à des demi-périodes de fréquence du réseau alternatif.

3. Procédé selon les revendications 1 et 2, **caractérisé par** la détermination du centre de gravité pour les demi-périodes de fréquence du réseau alternatif et de son utilisation en tant que référence pour la synchronisation des tranches de temps par l'intermédiaire d'une détermination d'un temps (t_{G}) pour lequel la zone d'amplitude de signal de fréquence du réseau des deux côtés de la demi-période de fréquence du réseau est égale sur les côtés.

4. Procédé selon la revendication 3, **caractérisé en ce que** la détermination du temps (t_{G}) est effectuée par l'intermédiaire de l'intégration des zones (Y1, Y2) une par une, la comparaison des zones, la détermination du décalage et l'intégration répétitive jusqu'à ce qu'elles correspondent l'une à l'autre.

5. Procédé selon l'une quelconque des revendications précédentes, **caractérisé en ce que** la totalité des charges (4, 9) reliées au circuit série reçoivent une adresse individuelle, unique pour le circuit auquel la charge est attachée.

6. Procédé selon la revendication 5, **caractérisé en ce que** les ensembles d'éclairage comportant des lampes commandées de façon séparée reçoivent une adresse pour chaque lampe d'ensemble d'éclairage.

7. Procédé selon la revendication 5 et 6, **caractérisé en ce que** chaque ensemble de charges qui doivent être mises en oeuvre sous forme d'un groupe, séparé des autres ensembles, reçoit une désignation de fonction de charge alphanumérique (TWY1, LO1, SB1).

8. Procédé selon la revendication 7, **caractérisé en ce qu'**on affecte une ou plusieurs adresses de groupe à chaque module de commutation de moniteur d'éclairage (10) et module d'interface de capteur (11), lesquelles adresses de groupe appartiennent à chacune d'une fonction de charge spécifique.

9. Procédé selon la revendication 8, **caractérisé en ce que** l'on affecte une ou plusieurs tranches de temps (TS) aux modules, durant lesquelles ils devront répondre avec leurs informations d'état.

10. Procédé selon l'une quelconque des revendications précédentes, **caractérisé en ce que** les séquences destinées à établir la transmission d'informations de surveillance et de commande dans les deux directions sur des câbles série entre des entités en communication sont constituées en transmettant de façon cyclique un certain nombre de signaux de synchronisation d'un premier type et d'un second type à partir de la commande principale (14), chaque nombre étant programmable, chacun des signaux de synchronisation étant suivi par un nombre programmable de tranches de temps (TS).

11. Procédé selon la revendication 10, **caractérisé en ce que** le premier type de signal de synchronisation déclenche une séquence utilisée pour surveiller des objectifs et **en ce que** le second type de signal de synchronisation déclenche une séquence lorsque des instructions doivent être transmises.

12. Procédé selon la revendication 11, **caractérisé en ce que** le second type de signal de synchronisation a priorité sur le premier type de signal de synchronisation en lui permettant ainsi d'interrompre le premier type de séquence de signal de synchronisation lorsque des instructions doivent être transmises.

13. Procédé selon la revendication 12, **caractérisé en ce que** des tranches de temps après le premier signal de synchronisation sont autorisées à être terminées.

14. Procédé selon la revendication 13, **caractérisé en ce que** le second signal de synchronisation est choisi de sorte que des réponses provenant de groupes adressés soient obtenues immédiatement après le second signal de synchronisation.

15. Procédé selon les revendications 9 à 14, **caractérisé en ce que** dans le cas d'une réponse manquante à partir d'un module de commutation de moniteur d'éclairage (10) ou d'un module d'interface de capteur (11) ayant précédemment répondu, le même signal de synchronisation dans le nombre programmable est répété et lors d'une réponse encore manquante, la charge est supposée être défaillante.

16. Système conçu pour transférer des informations de commande et de surveillance entre une commande principale (14, 16, 24) et au moins un module de commutation de moniteur d'éclairage (10) adressable ou un module d'unité d'interface de capteur (11) adressable, dans lequel
chaque module de commutation de moniteur d'éclairage (10) et module d'unité d'interface de capteur (11) est relié au côté secondaire de chaque transformateur d'isolement série (16) dont le côté principal est relié en série à un câble d'alimentation (2) alimenté avec un courant de fréquence du réseau alternatif par un générateur à courant constant (12) comportant un filtre (62) relié afin d'empêcher que des signaux à fréquence élevée n'atteignent le générateur à courant constant, et
le signal de transfert est superposé au courant de fréquence du réseau alternatif afin d'obtenir la commande et la surveillance des charges (4, 9) dans des systèmes d'éclairage de terrain d'aviation,
une partie des demi-périodes de fréquence du réseau alternatif constituent des tranches de temps pour un transfert de message avec des impulsions à tension élevée à haute fréquence superposées qui sont des supports de données dans chaque tranche de temps,
les impulsions se produisant au niveau du côté de transformateur principal par l'intermédiaire de courtes interruptions d'un circuit série (30) commandé par un commutateur de commande (32) du côté secondaire du transformateur, les interruptions créant une haute impédance commandée d'où il résulte que les interruptions ont lieu à l'intérieur de la tranche de temps, le total des interruptions, chacune créant une impulsion à tension élevée du côté principal du transformateur, en constituant un signal d'impulsion en vue de transférer les données, dans lequel
une commande principale (14, 16, 24) est conçue pour utiliser le transfert de données en vue de la commande des fonctions de charge et de la lecture de l'état des charges,
un modulateur-démodulateur (modem) de circuit série (60) relié au transformateur d'isolement série (6) est conçu pour synchroniser les tranches de temps avec la partie du courant de fréquence du réseau alternatif déterminées pour ne contenir presque aucune ou peu de distorsions en comparaison avec les signaux d'impulsions, d'où il résulte que les impulsions à tension élevée sont générées au travers des transformateurs d'isolement série existants (6) au travers du module de commutation de moniteur d'éclairage (10) et du module d'unité d'interface de capteur (11).

17. Système selon la revendication 16, **caractérisé en ce qu'**un signal d'impulsion porte un bit de données numériques dans chaque tranche de temps d'où il résulte que le signal d'impulsion contient des impulsions en rafale à tension élevée superposée à des demi-périodes de fréquence du réseau alternatif.

18. Système selon les revendications 16 et 17, **caractérisé par** un moyen (79) conçu pour déterminer le centre de gravité pour les demi-périodes de fréquence du réseau alternatif et l'utiliser en tant que référence pour la synchronisation des tranches de temps par l'intermédiaire de la détermination d'un temps (t_{G}) pour lequel la zone d'amplitude de signal de fréquence du réseau des deux côtés de la demi-période de fréquence du réseau est égale sur les côtés.

19. Système selon la revendication 18, **caractérisé en ce que** le moyen (79) est conçu pour déterminer le temps (t_{G}) par l'intermédiaire de l'intégration des zones (Y1, Y2) une par une, comparer les zones, déterminer le décalage et réaliser une intégration répétitive jusqu'à ce qu'elles correspondent l'une à l'autre.

20. Système selon les revendications 16 à 19, **caractérisé en ce que** la totalité des charges (4, 9) reliées au circuit série utilisent une adresse individuelle, unique pour le circuit auquel la charge est attachée.

21. Système selon la revendication 20, **caractérisé en ce que** des ensembles d'éclairage comportant des lampes commandées de façon séparée utilisent une adresse pour chaque lampe d'ensemble d'éclairage.

22. Système selon la revendication 20 et 21, **caractérisé en ce que** chaque ensemble de charges qui doivent être mises en oeuvre sous forme d'un groupe, séparé des autres ensembles, utilisent une désignation de fonction de charge alphanumérique (TWY1, LO1, SB1).

23. Système selon la revendication 22, **caractérisé en ce qu'**on affecte une ou plusieurs adresses de groupe appartenant à chaque fonction de charge spécifique à chaque module de commutation de moniteur d'éclairage (10) et module d'interface de capteur (11).

24. Système selon la revendication 23, **caractérisé en ce qu'**on affecte une ou plusieurs tranches de temps (TS) aux modules, durant lesquelles ils devront répondre avec leurs informations d'état.

25. Système selon la revendication 16 à 24, **caractérisé en ce que** les séquences destinées à établir la transmission d'informations de surveillance et de commande dans les deux directions sur des câbles série entre des entités en communication sont constituées en transmettant de façon cyclique un certain nombre de signaux de synchronisation d'un premier type et d'un second type à partir de la commande principale (14), chaque nombre étant programmable, chacun des signaux de synchronisation étant suivi par un nombre programmable de tranches de temps (TS).

26. Système selon la revendication 25, **caractérisé en ce que** le premier type de signal de synchronisation déclenche une séquence utilisée pour surveiller des objectifs et **en ce que** le second type de signal de synchronisation déclenche une séquence lorsque les instructions doivent être transmises.

27. Système selon la revendication 26, **caractérisé en ce que** le second type de signal de synchronisation a une priorité sur le premier type de signal de synchronisation en lui permettant ainsi d'interrompre la première séquence de signal de synchronisation lorsque des instructions doivent être transmises.

28. Système selon la revendication 27, **caractérisé en ce que** des tranches de temps après le premier signal de synchronisation sont autorisées à être terminées.

29. Système selon la revendication 28, **caractérisé en ce que** le second signal de synchronisation est choisi de sorte que des réponses provenant des groupes adressés soient obtenues immédiatement après le second signal de synchronisation.

30. Système selon les revendications 24 à 29, **caractérisé en ce que** dans le cas d'une réponse manquante à partir d'un module de commutation de moniteur d'éclairage (10) ou un module d'interface de commutateur (11) ayant répondu précédemment, le même signal de synchronisation dans le nombre programmable est répété et lors d'une réponse encore manquante, la charge est supposée être défaillante.

31. Système selon la revendication 18, **caractérisé en ce que** le moyen (79) destiné à déterminer le temps (t_{G}) comprend un premier moyen (I2) en vue de l'intégration des zones d'amplitude de signal de demi-période (Y1, Y2) pour la zone (Y1) durant un temps préétabli et pour la zone (Y2) pour la durée de demi-période restante qui suit le temps préétabli, comparer les intégrations avec des moyens (I1, I2) destinés à comparer les zones des signaux d'amplitude intégrés, appliquer la sortie provenant de la comparaison au moyen de commande (I3) pour commander le temps préétabli devant être décalé par un moyen (FF, G) destiné à réaliser un décalage dans le temps (T_{G}), répéter l'intégration jusqu'à ce que les zones (Y1, Y2) soient égales de manière à trouver le temps (t_{G}) et l'utiliser en tant que référence en vue de la synchronisation des tranches de temps.

32. Système selon la revendication 31, **caractérisé en ce que** la valeur de début de temps préétabli est le temps pour un quart de la durée de période d'un signal sinusoïdal non modulé de fréquence du réseau alternatif, c'est-à-dire 5 ms pour 50 Hz et approximativement 4,17 ms pour 60 Hz.
